**Europäisches Patentamt**

**European Patent Office**

**Office européen des brevets**

(19)

(11) Veröffentlichungsnummer : **0 207 108 B2**

(12) # NEUE EUROPÄISCHE PATENTSCHRIFT

(45) Veröffentlichungstag der neuen Patentschrift :
**05.02.92 Patentblatt 92/06**

(51) Int. Cl.$^5$ : **B05B 15/12**

(21) Anmeldenummer : **86900074.5**

(22) Anmeldetag : **23.12.85**

(86) Internationale Anmeldenummer :
**PCT/DE85/00558**

(87) Internationale Veröffentlichungsnummer :
**WO 86/03994 17.07.86 Gazette 86/17**

(54) BESCHICHTUNGSKABINE ZUM ÜBERZIEHEN DER OBERFLÄCHE VON WERKSTÜCKEN MIT BESCHICHTUNGSPULVER.

(30) Priorität : **02.01.85 DE 3500005**

(43) Veröffentlichungstag der Anmeldung :
**07.01.87 Patentblatt 87/02**

(45) Bekanntmachung des Hinweises auf die Patenterteilung :
**05.04.89 Patentblatt 89/14**

(45) Bekanntmachung des Hinweises auf die Entscheidung über den Einspruch :
**05.02.92 Patentblatt 92/06**

(84) Benannte Vertragsstaaten :
**AT CH DE FR GB IT LI NL SE**

(56) Entgegenhaltungen :
**EP-A- 0 100 932**
**EP-A- 8 200 024**

(56) Entgegenhaltungen :
**DE-A- 2 936 424**
**DE-A- 3 140 454**
**DE-U-81 196 903**
**GB-A- 2 035 834**

(73) Patentinhaber : **ESB ELEKTROSTATISCHE SPRÜH- UND BESCHICHTUNGSANLAGEN G.F. VÖHRINGER GMBH**
**Dr. Zimmermann-Strasse 18**
**W-7758 Meersburg (DE)**

(72) Erfinder : **VÖHRINGER, Gerhard, Friedrich**
**Mainauweg 8**
**W-7990 Friedrichshafen (DE)**
Erfinder : **REISER, Armin**
**Neulandstrasse 16**
**W-7990 Friedrichshafen (DE)**

(74) Vertreter : **Braito, Herbert, Dipl.-Ing.**
**Patentanwalt Bahnhofstrasse 29**
**W-7950 Biberach 1 (DE)**

EP 0 207 108 B2

## Beschreibung

Die Erfindung bezieht sich auf eine Beschichtungskabine zum Überziehen einer Oberfläche von Werkstücken mit Beschichtungspulver, das im Beschichtungsraum der Kabine mittels einer Luftströmung zum Werkstück geführt wird, mit einer Saugeinrichtung zum Absaugen der Kabinenluft durch ein Filteraggregat mit mehreren in Form eines Flächenfilters ausgebildeten Filterelementen hindurch in einen auf deren Strömungsrückseite angeordneten Reingasraum, der eine Abreinigungsvorrichtung zum zwischenzeitigen Abreinigen der Filterelemente während des Sprühbetriebes aufweist, wobei auf dem Kabinenboden eine Abräumvorrichtung zum Abräumen und Zuführen von Überschußpulver zu einem Pulverbehälter angeordnet ist.

Mit der Bezeichnung « Flächenfilter » werden hier ebenflächige Filter mit geringer Dicke bzw. geringer wirksamer Filtertiefe bezeichnet, unabhängig davon, in welcher Form das Filtermaterial selbst angeordnet ist. Die einzelnen wirksamen Filterflächen haben dann von einer Grenzebene des Filteraggregates oder auch eines Filterkörpers bzw. eines Filterelementes her einen verhältnismäßig kleinen Abstand. Im Prinzip können Filterplatten zum Einsatz kommen. In der Regel handelt es sich jedoch um Filterbahnen, aus Papier, Kunststoff oder dergleichen dünnem Filtermaterial, das auch zick-zack-förmig oder wellenförmig gelegt sein kann, um die wirksame Filterfläche zu vergrößern, ohne den Zugang zu Abreinigungszwecken zu behindern.

Beispielsweise sind zwei Filterplatten (70) nach der US-A-43 03 417 schräg über einer oberen Innenkante des Beschichtungsraumes angebracht, wobei der dadurch abgeteilte Restraum einen Reingasraum bildet, aus welchem die gefilterte Luft herausgesaugt wird. Dabei ist aber die verfügbare Filterfläche ebenso begrenzt wie die qualitative und Quantitative Filterleistung, und das Auswechseln der hochliegenden plattenförmigen Filterelemente ist erschwert. Beim Farbwechsel muß, wie übrigens bei jeder Pulver-Umstellung, die Filterplatte herausgenommen und außerhalb der Kabine gereinigt werden.

Eine selbsttätig arbeitende Abreinigungsvorrichtung für Filterelemente zeigt auch die DE-A-25 50 918, die Verwendung eines waagerecht verfahrbaren Filterwagens zum Abreinigen von parallel zueinander lotrecht angeordneten Filtertaschen, die taktweise Druckluftstößen ausgesetzt werden.

Eine andere selbsttätige Abreinigungsvorrichtung zeigt die DE-A-14 07 293, wonach waagerecht angeordnete Blasrohre mit mehreren Düsenöffnungen entlang der Oberfläche von V-förmig angeordneten Sieben oder Flächenfiltern für Entstaubungsanlagen verfahrbar angeordnet sind. Beide Vorrichtungen eignen sich jedoch nicht für den Einsatz in Wiedergewinnungsanlagen von Beschichtungskabinen.

Bekannt ist ferner durch die DE-A-19 51 361 eine Beschichtungskabine, von deren Rückwand ein Reingasraum durch ein lotrecht angeordnetes und zickzackartig gefaltetes Filter abgetrennt ist. Dabei ist jedoch die Filterfaltung des dünnen Filtermaterials derart grob, daß die Gesamtdicke über 15 Prozent der gesamten Kabinentiefe ausmacht. Das Filter kann daher nur grob abgereinigt werden und wird bei jeder Farbumstellung ausgebaut. Es ist zudem sehr instabil und kann nur geringer Druckbelastung ausgesetzt werden.

Ein noch gröber gefaltetes Zickzackfilter, dessen Dicke etwa die halbe Kabinentiefe erreicht und das in einem ausfahrbaren Wagen an der Kabinenrückseite angebracht ist, zeigt die US-A-44 01 445. Das Filter muß zur Reinigung mit dem Filterwagen als Ganzes aus der Kabine herausgefahren werden. Auch dabei ist daher die Reinigung nur umständlich und meist unvollständig zu bewerkstelligen.

Schließlich ist durch die DE-A-31 40 454 eine Pulver-Beschichtungskabine gemäß Oberbegriff des Anspruches 1 bekannt, die einen um eine lotrechte Achse drehbaren Wandteil (5) aufweist, der auf wenigstens einer Seite ein in den Kabinenraum hinein vorragendes Filterelement aufweist, das durch eine Batterie lotrechter Kunststoffrohre gebildet ist, die wenigstens unten auf einer Platte enden und mehrere « Taschen » bilden, die während des Betriebes aufeinanderfolgend abgeblasen werden. Auch wenn der die Filtereinrichtung tragende Wandteil ortsfest gehalten bleibt, ist der erforderliche Raumaufwand dieser Konstruktion außerordentlich groß. Da die Rohre quer zu der sie tragenden Wand gestaffelt anzuordnen sind, ragt ein solches Filterelement weit in den Kabinenraum hinein. Dadurch wird die Abreinigung selbst ebenso erschwert wie die Weiterförderung des nicht niedergeschlagenen Pulvers. Der gesamte Raumaufwand ist zudem schon bei Verwendung eines einzigen Filteraggregates unverhältnismäßig groß. Bei zwei Filteraggregaten an einer drehbaren Wand ist er umso größer, zumal nur ein Teil der Wandbreite für die Filterhalterung ausgenutzt werden kann. Ferner muß der Rand des schwenkbaren Wandteiles abgedichtet werden und ist durch die dort verwendeten Schlauchdichtungen beschädigungsanfällig.

Die Erfindung geht aus von der eingangs definierten Pulverbeschichtungskabine und befaßt sich mit der Aufgabe, das Filteraggregat bei vorgegebener Filterleistung möglichst raumsparend unterzubringen und so zu gestalten und anzuordnen, daß die Filterelemente einerseits leicht gehandhabt, ein- und ausgebaut, zum anderen aber in ihrer Kabinenhalterung einer gründlichen und porentiefen Reinigung unterzogen werden können, um die verfügbare Einsatzzeit der gesamten Kabine auch bei Farbwechselvorgängen ohne Filterwechsel zu steigern.

Zur Lösung dieser Aufgabe sitzen die Filterelemente auswechselbar in einzelnen Rahmenfeldern eines formsteifen Rahmenwerkes das in einer Aussparung einer zwischen Beschichtungsraum und Reingasraum etwa lotrecht angeordneten Seitenwand angebracht ist. Die Filterelemente weisen Oberflächen-Membran filter mit einer luftdurchlässigen aussteifenden Trangschicht und einer wenigstens einseitig auf dieser angebrachten Oberflächen-Membran aus flexiblem elastisch verformbaren Kunststoff auf, in die eine Vielzahl Durchbrechungen eingeformt sind.

Hier nimmt das Flächenfilter selbst praktisch keinen zusätzlichen Raum ein, versperrt keinen solchen Raum und kann nahezu beliebig groß und widerstandsfähig ausgebildet sein, dadurch läßt sich die Strömungsbelastung steigern und damit auch die Filterleistung. Durch die Anordnung in einzelnen Feldern des Rahmenwerkes wird die Handhabung erleichtert, so daß nach Bedarf ausgewechselt oder für eine besonders gründliche Tiefenreinigung auch die einzelnen Filterelemente zwischenzeitig ausgebaut werden können. Grundsätzlich kann jedoch in den Rahmenfeldern einmal während des Betriebes und zum anderen auch in den Betriebspausen die Abreinigung so gestaltet werden, daß die Umstellung auf anderes Pulvermaterial, insbesondere andere Farbtöne ohne Filterausbau vonstatten gehen kann. Dadurch werden die Rüstzeiten beim Farbwechsel ebenso herabgesetzt wie die gesamten Investitionskosten.

Die großflächige Ausbildung des Filteraggregates in einer Seitenwand, insbesondere der Rückwand des Beschichtungsraumes, führt zu einer Vergleichsmäßigung und Stabilisierung der Strömung des vom Fördergas getragenen Pulvers in der Kabine. Dadurch wird die Pulverkonzentration in der Kabinenluft ebenso vergleichmäßigt wie die schließlich damit erzeugte Pulverdichte der Werkstück-Oberfläche. Da auch die Abräumvorrichtung am Kabinenboden keinen wesentlichen Raum in Anspruch nimmt, ergibt sich eine besonders raumsparende Bauweise, die lediglich durch eine gewisse Tiefe des hinter der Rüchwand vorzusehenden Reingastraumes beeinflußt wird.

Die Handhabung der Filterelemente wie des ganzen Filteraggregates wird ebenso verbessert, wie die Filterleistung gesteigert wird, sofern jedes Filterelement in einer Wechselkassette gefaßt wird. Auf diese Weise wird das Filterelement gegen Beschädigung von außen, auch gegen Überlastung durch übergroße Druckdifferenz geschützt. Es kann dann gegebenenfalls vom Beschichtungsraum her quer zu seiner Ebene in ein Feld des Rahmenwerkes eingesetzt und durch Riegelvorrichtungen verspannt im Rahmenwerk festgelegt werden. Durch zickzackförmige oder wellenförmige Faltung der Flächenfilterbahn läßt sich so die wirksame Filterfläche ohne Überlastungsgefahr außerordentlich steigern.

Das deutsche Gebrauchsmuster 81 19 690.3 zeigt einen quaderförmigen Spritzstand zum Spritzlackieren von vor dem Stand befindlichen Werkstücken, wobei die Absaugöffnungen durch Filterelemente überdeckt sind und an der Frontseite eine Anschlußöffnung für ein Sauggebläse vorgesehen ist. Dabei sind bereits die mit untereinander gleichen Abmessungen ausgeführten und miteinander verbundenen rechteckigen Wandelemente facettenartig aus einem Rahmen eines Rahmenwerkes gebildet, in dessen Felder mittels Umfangnuten jeweils eine quadratische Filterplatte auswechselbar eingesetzt ist. Mit solchen Wechselkassetten wir zwar das Filterelement gegen Beschädigung von außen, auch gegenüber Belastung durch übergroße Druckdifferenz geschützt.

Bei einer erfindungsgemäßen Ausführung kann zudem die Wechselkassette gegebenfalls vom Beschichtungsraum her quer zu ihrer Ebene in ein Feld des Rahmenwerkes eingesetzt und durch Riegelvorrichtungen verspannt festgelegt werden.

Eine weitere Steigerung der Flächenbelastbarkeit und damit der Filterleistung wird durch den Einsatz einer Impuls-Abreinigungsvorrichtung zum zwischenzeitigen Abreinigen der Filterelemente während des Sprühbetriebes ferner dadurch erreicht, daß Filterelemente mit Oberflächen-Membranfiltern eingesetzt werden, die eine luftdurchlässige aussteifende Tragschicht und eine wenigstens einseitig auf dieser angebrachte Oberflächen-Membran aus flexiblem elastisch verformbaren Kunststoff aufweisen, in die eine Vielzahl Durchbrechungen eingeformt sind. Als zweckmäßig hat es sich hierbei erwiesen, wenn die Oberflächen-Membran zur Bildung dünner langgestreckter Fäden zwischen schlitzartigen Durchbrechungen wenigstens eindimensional gereckt ist.

Das hier eingesetzte Oberflächen-Filtermaterial hat den besonderen Vorzug, daß einmal die lichten Weiten der insbesondere schlitzartigen Membran-Durchbrechungen ungewöhnlich klein sind, andererseits der Anteil dieser Durchbrechungen an der gesamten Membranfläche außerordentlich groß ist. Da zudem die Membran selbst entsprechend dünn ist, was auch eine dünne Ausbildung der Tragschicht ermöglicht, ist eine resultierende Dicke der Oberflächen-Filterbahn deutlich kleiner als bei herkömmlichen Filtermaterialien. Dies wirkt sich besonders vorteilhaft aus bei der Faltung in der hier eingesetzten Filterkassette, da sich so im verfügbaren Kassettenvolumen entsprechend vergrößerte wirksame Filterfläche unterbringen läßt.

Schließlich liegt noch ein Vorteil der Oberflächen-Membranfilterbahn darin, daß die zum Beschichtungsraum hin liegende Fläche sehr glatt, aber auch gegen mechanische Beanspruchung unempfindlich ist. Das wirkt sich zunächst dahin-gehend aus, daß größere Pulverkörner fast ausnahmslos abgewiesen werden und an der vornehmlich lotrechten Fläche herabfallen, während kleine Pulverpartikel nur relativ geringen Haft- und Haltekräften ausgesetzt werden. Dies erleichtert wieder die Abreinigung und verbessert die Wirkung der Impuls-Abreinigung, die durch die eingangs erwähnte US-PS 43 03 417 für weitgehend starre Filterplatten an sich ebenfalls bekannt ist, wie durch die US-PS 44 01 445 und die DE-A1-31 40 454. Diesen Ausführungen gegenüber bringt aber die hier herausgestellte Kombination von Membranfiltern mit Impulsabreinigung einen neuartigen Effekt dadurch, daß die Oberflächenmembran auf den auslösenden Impuls folgenden Nachschwingungen ausgesetzt wird, die zusätzliche Ablöseeffekte mit sich bringen. Die auf die verfügbare Fläche bezogene Filterleistung kann daher durch die vorstehend angegebene Kombination erheblich gesteigert werden. Vornehmlich durch die verringerten Haftkräfte und die bessere Ablösbarkeit der Pulverpartikel ist es daher grundsätzlich möglich, nach der jetzt eingesetzten Impuls-Abreinigung beim Farbwechsel auch auf kontrastierende Farben überzugehen.

Zwar ist die Oberflächen-Membran verhältnismäßig widerstandsfähig gegen Verschleiß durch das aufprallende Pulver, der Verschleiß läßt sich aber nach langdauernder Benutzung nicht völlig ausschließen, ebensowenig die Veränderung der Oberflächenstruktur durch Aufrauhen. Um dem entgegenzuwirken verwendet man besonders hochwertige Kunststoffe wie Polytetrafluorethylen (PTFE). Andererseits kann sich die Haftwirkung für kleinere Pulverpartikel mit der Zeit steigern. Damit sich trotz solcher Verschleißerscheinungen die Nutzlebensdauer der einzelnen Filterelemente steigern läßt, wird im Beschichtungsraum vor der das Filteraggregat aufnehmenden Rückwand eine zweite Abreinigungsvorrichtung zur Grundreinigung der Filterelemente angebracht.

Bevorzugt wird für diese zweite Abreinigungsvorrichtung die Verwendung eines im Beschichtungsraum längs der Ebene des Filteraggregates hin- und hergehend geführten Abreinigungswagens mit einer Führung für einen lotrecht hin- und hergehend bewegbaren Schlitten mit einer Abreinigungsdüse, deren Bewegungsraum durch eine Leitschale überdeckt ist, die ebenso wie eine vor dem Filteraggregat angeordnete Abschirmung und gegebenenfalls eine besondere Absaugeinrichtung den Abtransport des vom Filter abgelösten Pulvers begünstigt.

Für viele Anwendungen ist eine Grundreinigung durch die zweite Abreinigungsvorrichtung in der Kabine durchaus hinreichend. Diese Grundreinigung erfordert aber einige Zeit, während welcher keine Werkstücke beschichtet werden können. Aus diesem Grunde ist es oftmals zweckmäßig, die Filterelemente mit ihren Schnellwechsel-Kassetten auszutauschen und die ausgebauten Kassetten einer intensiven Reinigung außerhalb der Filterkabine zuzuführen.

Der Einsatz der Oberflächen-Membranfilter in Wechselkassetten hat zudem noch den Vorteil, daß die wenig formsteife Membran in der Kassette abgestützt werden kann, um den großen Anströmdruck von ca. 4 bis 7 bar zu widerstehen.

Weitere Merkmale und Vorteile der Erfindung sind in den Unteransprüchen festgehalten und sollen nun ausführlicher erläutert werden. Die Zeichnung gibt die Erfindung beispielsweise wieder. Es zeigen

Fig. 1 die räumliche Ansicht zweier erfindungsgemäß ausgebildeter Doppelkabinen,
Fig. 2 diese Kabinen in Richtung des Pfeiles II in Fig. 1 von vorn gesehen,
Fig. 3 eine Ansicht dieser Kabinen von links in Fig. 2 gesehen,
Fig. 4 einen Schnitt nach der Linie IV-IV in Fig. 2,
Fig. 5 eine Ansicht eines für vier Filterelemente eingerichteten Filteraggegates, die
Fig. 6+7 Schnitte durch dieses Filteraggregat nach den Linien VI-VI und VII-VII in Fig.5,
Fig. 8 in größerem Maßstab eine Stelle aus Fig. 7,
Fig. 9 einen Teilschnitt durch das Filteraggregat und eine vor diesem angebrachte Abschirmung,
Fig. 10 einen Teilschnitt nach der Linie IX-IX in Fig. 4,
Fig. 11 einen weiteren Teilschnitt längs der Linie X-X in Fig. 4 mit einer Grundreinigungsvorrichtung,
Fig. 12 den Antrieb einer Bodenreinigungseinrichtung und
Fig. 13 eine vergrößerte Schnittdarstellung nach der Linie XII-XII in Fig. 12.

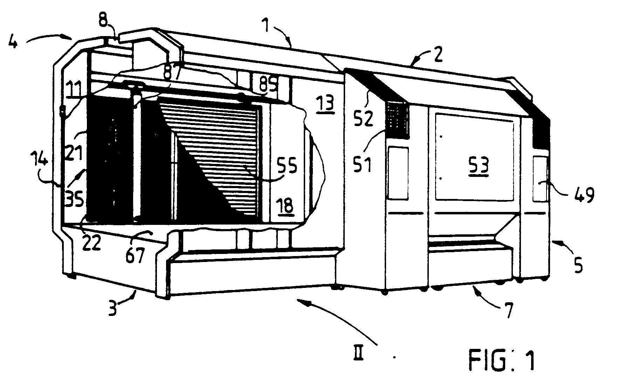

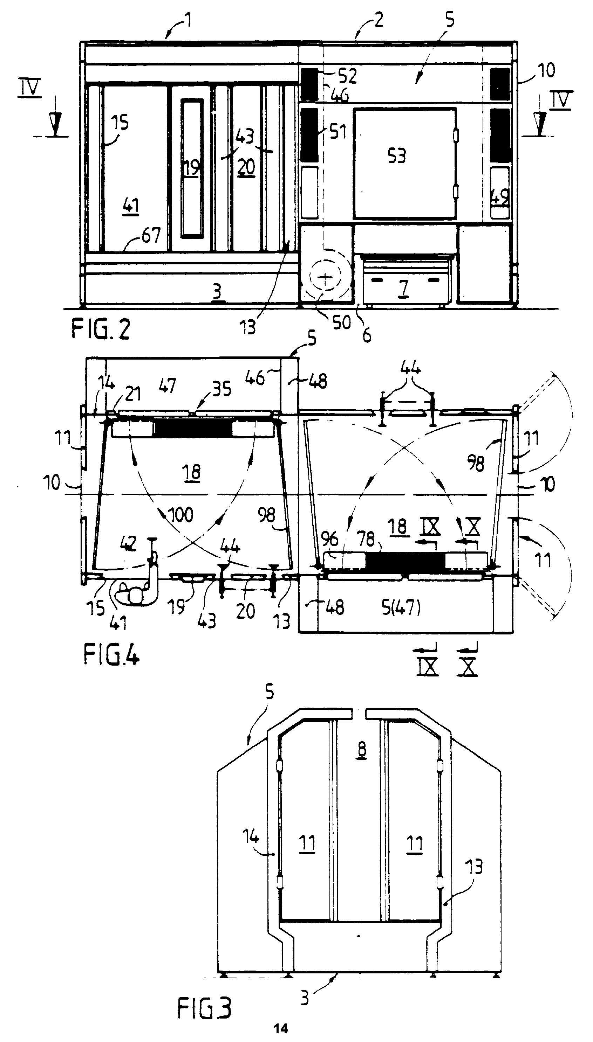

Die Fig. 1 bis 4 zeigen zwei in Längsrichtung aneinandergefügte Kabineneinheiten (1, 2), die jeweils einen Sockelteil (3), einen tunnelförmigen Aufbau (4), einen Gebläseanbau (5) und einen in einer Ausnehmung (6) des Sockelteils (3) angeordneten Pulverbehälter (7) aufweisen. Der Tunnelaufbau (4) kann an seinen Stirnseiten (10) durch Schwenktüren (11) ganz oder beiderseitig eines Durchlaufschlitzes (8) teilweise verschlossen werden.

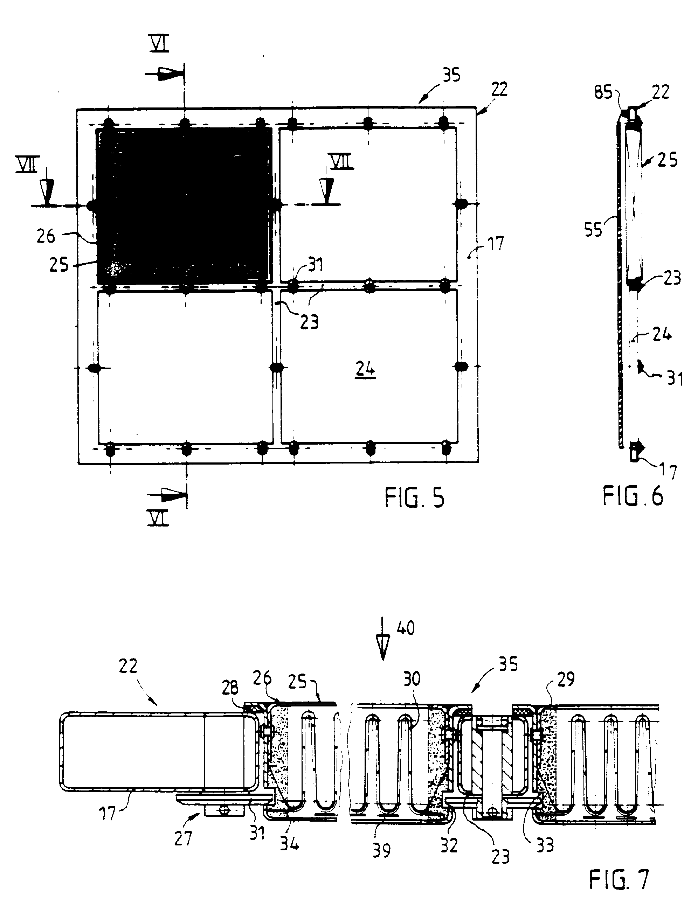

Jede Kabineneinheit (1, 2) weist eine Vorderwand (13) und eine Rückwand (14) auf, die mit den Stirnseiten (10) den Beschichtungsraum (18) begrenzen. Eine in der Vorderwand (13) vorgesehene Frontöffnung (15) ist durch einzelne, insbesondere verstellbare Wandteile (19, 20) unterteilt in einen breiteren Einsprühschlitz (41) für eine von Hand geführte Sprühpistole (42) und zwei schmale Einsprühschlitze (43) für automatische Sprühpistolen (44) Fig.4.

An die Rückwand (14) schließt sich außen der Gebläseanbau (5) an, der durch Trennwände (46) unterteilt ist in einen mittleren Reingasraum (47) und zwei seitliche Gebläseräume (48). Jeder dieser Gebläseräume (48)

4

ist von außen durch eine Tür (49) zugängig und nimmt wenigstens ein Sauggebläse (50) auf, das saugseitig mit dem Reingasraum (47) und druckseitig mit der Umgebungsluft durch Gitter (51, 52) in Verbindung steht. Der Reingasraum (47) selbst ist durch eine weitere Schwenktür (53) von außen zugängig.

In der Rückwand (14) wenigstens einer Kabine ist eine sich über deren größten Teil erstreckende Filteraussparung (21) angebracht, die ein plattenförmiges Filteraggregat (35) mit vier Filterelementen (25) aufweist, die jeweils in durch den Außenrahmen (17) und Rahmenholme (23) begrenzten rechteckförmigen Rahmenfeldern (24) eines Rahmenwerkes (22) angeordnet sind.

Jedes dieser Filterelemente (25) sitzt in einer als Wechselkassette (26) ausgebildeten Rahmenfassung, die durch Riegelvorrichtungen (27) mittels einer Randdichtung (28) abdichtend am Außenrahmen (17) und an den Rahmenholmen (23) gehalten wird. Mit einem Rahmenwinkel (29) umschließt die Kassette jeweils eine wellenförmig gefaltete Filterbahn (30) und hält deren Räder mittels einer Lage (34) eines Vergusses aus aushärtbarem Kunststoff abdichtend und zuverlässig.

Jede Riegelvorrichtung (27) am Außenrahmen (17) und an einem Rahmenholm (23) weist einen Schwenkriegel (31) auf, der mit wenigstens einer seiner beiden Riegelnasen (32) in eine Riegelaussparung (33) der Wechselkassette (26) unter einer Vorspannung eingreift, wie sie durch die elastisch verformbare Randdichtung (28) aufgebracht wird. Dessen einzelne Filterelemente (25) können daher bequem eingesetzt und ausgewechselt werden.

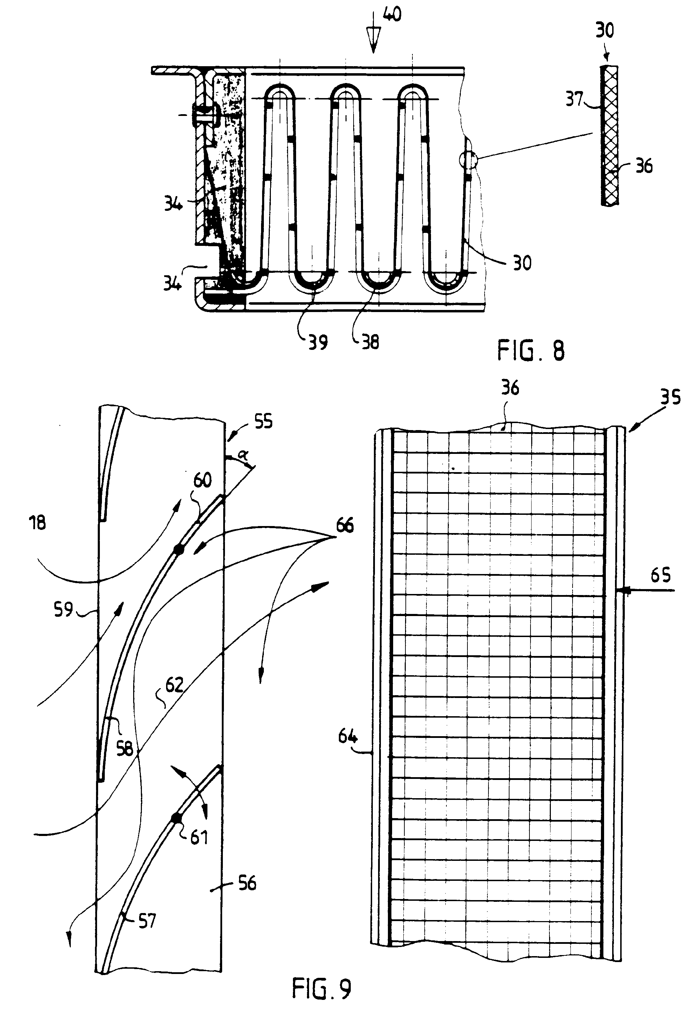

Die hier eingesetzte Filterbahn (30) besitzt nach Fig. 8 eine dickere Tragschicht (36) aus Sinterkunststoff, Filz, Vlies, Papier oder dergleichen, auf der einseitig zum Rohgasraum bzw. zum Beschichtungsraum (18) hin eine dünne Oberflächenmembran (37) aus elastisch verformbarem Kunststoff angebracht ist. Diese Oberflächenmembran ist mit zahlreichen langgestreckten Durchbrechungen versehen, die insgesamt einen verhältnismäßig großen Oberflächenanteil der Filterbahn (30) ausmachen, aber so eng sind, daß sie auch sehr feine Staubpartikel auffangen können.

Die Tragschicht (36) muß mindestens die gleiche Gasdurchlässigkeit wie die Oberflächenmembran (37) aufweisen, in der Regel ist sie vielfach größer, da ihre Funktion sich im wesentlichen darauf beschränkt, die Oberflächenmembran abzustützen. Die Oberflächenmembran (37) wird in der Regel durch eine Kunststoffolie gebildet, die zunächst mit feinen, etwa kreisförmigen Durchbrechungen versehen und dann übermäßig stark in einer oder mehreren zueinander geneigten Richtungen gereckt wird, so daß sich die Anfangsdurchbrechungen in die Länge ziehen und schlitzartig ausgebildet sind. Die Membran kann nachträglich auf der Tragschicht (36) angebracht werden. Im Prinzip ist es jedoch auch möglich, den Reckvorgang und auch die Lochungsvorgänge auf oder mit der Tragschicht durchzuführen.

Wenn sich auch grundsätzlich beide Schichten aus dem gleichen Grundmaterial herstellen lassen, so kann die Tragschicht doch in der Regal aus weniger hochwertigem Material bestehen. Beide Schichten müssen den von außen einwirkenden Einflüssen widerstehen können, wie sie durch die Verwendung unterschiedlichen Beschichtungsmaterials und dergleichen bei der Pulverbeschichtung auftreten. Bedeutsam ist aber vor allem die Werkstoffwahl für die Oberflächenmembran (37), wobei neben der Widerstandsfähigkeit die Festigkeit und Dehnbarkeit von erheblicher Bedeutung sind, um das Recken in zahlreiche sehr feine Fasern zu ermöglichen. Auf diese Weise wird eine besonders hohe Luftdurchlässigkeit bei relativ kleinen lichten Öffnungsweiten erzielt. Als bevorzugter Werkstoff für die Oberflächenmembran (37) hat sich Polytetrafluorethylen (PTFE) bewährt.

Die wellenförmig gefaltete Filterbahn (30) wird gemäß Fig. 7 in Richtung des Pfeiles (40) angeströmt. Sie sollte möglichst so versteift und innerhalb der Wechselkassette (26) zusätzlich abgestützt werden, daß keine luftdurchlässigen Teile unmittelbar gegen die Kassettenwandung gedrückt werden.

Zu diesem Zweck sind einmal die in Fig. 7 untenliegenden Bogenteile der Wellenbahn durch schalenartige Verstärkungen (38) ausgesteift. Zudem ist zwischen der Filterbahn und der Innenseite der Wechselkassette (26) ein siebartiges Stützgitter (39) aus Drahtgeflecht oder dergleichen zwischengefügt. Das Stützgitter soll einmal möglichst geringen Strömungswiderstand bieten, und zum anderen aber so formsteif sein, daß die vornehmlich in der Mitte des Filterelementes (25) aufgebrachte Abreinigungskraft geringere Durchbiegung aufnehmen kann.

Wie vor allem die Fig. 6 und 8 erkennen lassen, ist im normalen Sprühbetrieb auf der Kabinenseite vor dem Filteraggregat (35) eine Abschirmung (55) vorgehängt, die wenigstens zwei seitliche Randstege (56) und zwischen diesen eingefügte Lamellenblätter (57) aufweist. Deren zum Beschichtungsraum (18) hin liegende untere Enden (58) gehen tangential in die lotrechte Grenzebene (59) der Abschirmung über, ihr oberes Ende (60) bildet zur Lotrechten dagegen einen Winkel a von ca. 40°. Zweckmäßigerweise sind jedoch die oberen Endteile (60) entweder in sich verformbar oder um ein Gelenk (61) schwenkeinstellbar vorgesehen, um diesen Winkel den jeweils herrschenden Betriebsbedingungen anpassen zu können.

Im Sprühbetrieb wird die Luft aus dem Beschichtungsraum (18) gemäß den Strömungslinien (62) durch die Abschirmung (55) hindurchgesaugt und dann annähernd senkrecht auf die Oberfläche der Filterbahn (30) umgelenkt. Dadurch wird einmal die Strömung innerhalb des Beschichtungsraumes leicht ansteigend gestaltet, sodaß nicht am Werkstück haften bleibendes Überschußpulver weit getragen wird, um die Gleichmäßigkeit des Auftrages zu verbessern. Der verhältnismäßig scharfen Aufwärts-Umlenkung beim Eintritt in die Abschirmung (55) kann jedoch der überwiegende Teil der mitgeführten Pulverpartikel nicht folgen. Diese Teilchen prallen daher vornehmlich auf die Lamellen (57) und fallen von diesen auf den Kabinenboden (67).

Diejenigen Pulverteile, welche die Abschirmung (55) passiert haben, gelangen auf die Außenseite (64) der Oberflächenmembran (37). Diese Partikel können die Oberflächenmembran (37) nicht durchdringen, da auch die dort belassenen Durchbrechungen zu eng sind. Sie werden jedoch in der Regel aufgrund einer gewissen Oberflächenrauhigkeit und teilweise auch eines formschlüssigen Eingriffs in die Oberfläche angehalten und müssen durch einen zwischenzeitigen Abreinigungsvorgang gelöst werden. Die dabei von rechts in Fig. 8 durch die Filterbahn (30) hindurch geblasene Abreinigungsluft strömt im wesentlichen gemäß Pfeil (65) senkrecht durch die Filterbahn hindurch, wird aber in der Abschirmung (55) gemäß den Strömungsbahnen (66) nach unten abgelenkt, sodaß die von der Oberfläche (64) abgelösten Pulverteilchen unmittelbar nach unten zum Kabinenboden hin getragen werden.

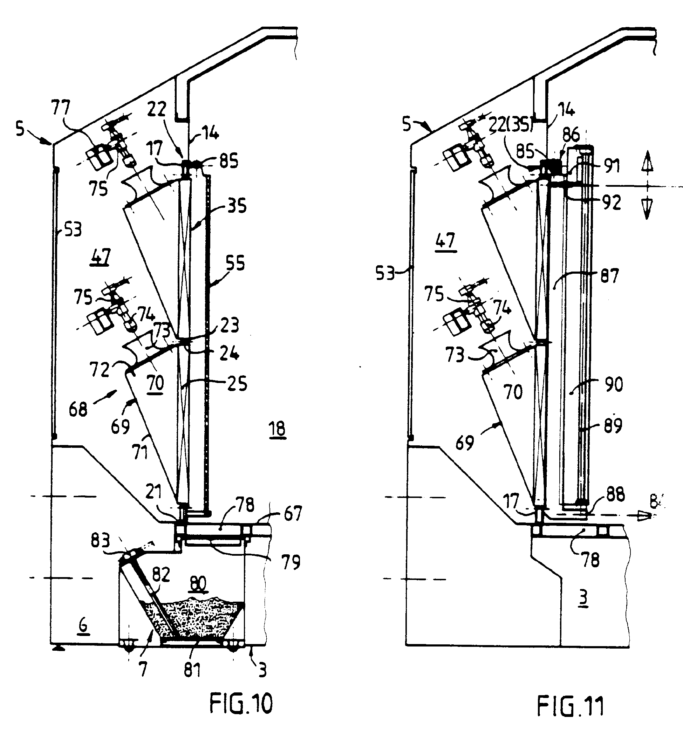

Wie Fig. 10 erkennen läßt, dient zur periodischen zwischenzeitigen Abreinigung eine jedem Rahmenfeld zugeordnete Impuls-Abreinigungsvorrichtung (68). Dabei ist jedem Rahmenfeld eine Schirmhaube (69) zugeordnet und am Rahmenwerk (22), insbesondere den Rahmenholmen (23) dicht befestigt. Grundsätzlich können mehrere Schirmhauben (69), etwa durch Trennwände von einem wannenförmigen Teil abgeteilt werden. Es sollte jedoch der den Impulsdruck übertragende Haubenraum (70) möglichst klein gehalten werden. Dieser Raum wird daher durch eine etwa unter 30° zur Filterebene geneigte Seitenwand (71) und eine etwa unter 60° zur Filterebene geneigte Kopfwand (72) begrenzt. Diese Kopfwand wird zweckmäßigerweise möglichst klein gehalten und über schräge Wände an den Rand des jeweiligen Rahmenfeldes (24) angeschlossen.

Über einer Öffnung der Kopfwand (72) ist ein Venturirohr (73) angebracht, das senkrecht zur Kopfwand in den Haubenraum (70) gerichtet ist. Zentrisch zur Achse des Venturirohres (73) ist außen im Reingasraum (47) eine Hochdruck-Blasdüse (74) angeordnet, die über ein Elektro-Magnetventil (75) an einen Druckluftbehälter (77) angeschlossen ist. Die einzelnen Magnetventile (75) werden zudem durch eine gemeinsame Steuerung in zyklischer Folge betätigt, sodaß mit gleichbleibenden Zeitabständen folgend jeweils eines der Ventile (75) eine vorgegebene Zeitspanne geöffnet wird und rechtzeitig einen Druckluftstoß in das jeweilige Venturirohr (73) gibt. Dieser Druckluftstoß reißt Sekundärluft aus dem Reingasraum (47) mit und erzeugt dadurch einen schlagartigen Druckanstieg im Haubenraum (70), der sich voll auf die einzig begrenzt nachgiebige Wandung, nämlich das Filterelement (25) auswirkt. Dank der dargestellten assymmetrischen Konfiguration der Schirmhaube (69) wird auch etwa gleichzeitig auf der ganzen Fläche des Filterelementes (25) maximale Druckbelastung erreicht.

Dieser schlagartige Druckanstieg hat zur Folge, daß neben mehr oder weniger geringer Deformation des Filterelementes auch durch die kleinsten Luftkanäle der Filtertrahn eine Vielzahl enger Strömungswege stoßartig durchpustet und durchfegt werden. Dadurch wird das an der der Abschirmung (55) zugewandten Oberfläche (64) haftende pulver losgerissen und vor oder hinter der Abschirmung (55) in Richtung auf den Kabinenboden (67) nach unten befördert, wo es durch eine Bodenöffnung (78) und eine darunter angebrachte Siebeinrichtung (79) in den Pulverraum (80) des Pulverbehälters (7) fällt. Nach Auflockerung durch eine am Boden des Pulverbehälters angebrachte Fluidisierungseinrichtung (81) kann unmittelbar von dort das gesiebte und aufgelockerte Pulver durch eine Fördereinrichtung (83) den Sprühpistolen (42, 44) zugeführt werden. Der Pulverbehälter (7) ist auf Rollen verfahrbar und kann insbesondene zum Farbwechsel ausgetauscht werden.

Oberhalb des Filteraggregates (35) und der zugehörigen Filteraussparung (21) ist an der Rückwand (14) eine waagerechte zylindrische Laufschiene (85) angebracht, an der normalerweise die Abschirmung (55) aufgehängt ist. Um eine Grundreinigung zu ermöglichen, wie sie nach langdauernder starker Belastung des Filtermaterials durchgeführt werden sollte, wird an dieser Laufschiene nach Fig. 10 durch oben und unten an dieser angreifende Rollen ein Laufwagen (86) mit einer hängenden Tragarmschale (87) aufgehängt. Diese hat etwa U- oder C-förmigen Querschnitt und ist mit ihrer offenen Seite dem Filteraggregat leicht abdichtend zugewandt. Am unteren Ende dieser etwa U-förmigen Tragarmschale ist ein Saugstutzen (88) angebracht, der sich an eine Saugeinrichtung z. B. einen üblichen Staub sauger anschließen läßt, um den Druck in den Raum zwischen der Tragarmschale (87) und dem Filteraggregat (35) unter dem atmosphärischen Druck zu halten. Dadurch läßt sich innerhalb der Tragarmschale (87) herabfallendes pulver absaugen und weiterfördern.

An dem Laufwagen (86), insbesondere der Tragarmschale (87) sind ferner eine lotrechte Stabführung (89) und ein Druckluftzylinder (90) angebracht, mittels welcher ein Düsenschlitten (91) mit einer Hochdruck-Blasdüse (92) ständig auf lotrechter Bahn gemäß Doppelpfeil (94) hin- und hergehend gefahren werden kann. Diese Hochdruck-Blasdüse ist an das Betriebs-Druckluftnetz angeschlossen und wird zusätzlich mit dem Laufwagen (86) schrittweise oder kontinuierlich waagerecht hin- und hergehend bewegt. Sie beschreibt also eine Meander-Rechteckbahn oder eine Zickzackbahn. Normalerweise ist die Druckluftdüse (92) senkrecht auf die Filterbahn gerichtet und spült dann zur Seite hin. Es kann jedoch auch zweckmäßig sein, sie etwas nach schräg

EP 0 207 108 B2

unten und damit in Richtung des Hohlraumes der Tragarmschale (87) blasen zu lassen, wodurch das Zusammenwirken mit der Strömung am Saugstutzen (88) gemäß Pfeil (84) verbessert wird.

Diese Grundabreinigung kann im Prinzip auch ausschließlich vom Beschichtungsraum (18) her betrieben werden. Die Reinigungswirkung wird aber noch weiterhin verbessert, wenn diese kontinuierliche Grundabreinigung mit der Impuls-Abreinigung aus dem Reingasraum (47) kombiniert wird, da sich dann die periodischen Impuls-Ausstoß- und Lösevorgänge mit dem Abfegen durch die Blasdüse (92) überlagern. Hierzu können auch Impulsdauer und -pausen jeweils unterschiedlich zu den normalen Betriebswerten vorgesehen werden. Auch diese Faktoren lassen sich wiederum selbsttätig periodisch variieren, was ohne weiteres durch eine elektronische Steuerung bewirkt werden kann. Diese läßt sich ebenso wie vergleichbare pneumatische Steuerungen im Reingasraum (47) unterbringen, der durch die Schwenktür (53) von außen zugängig ist.

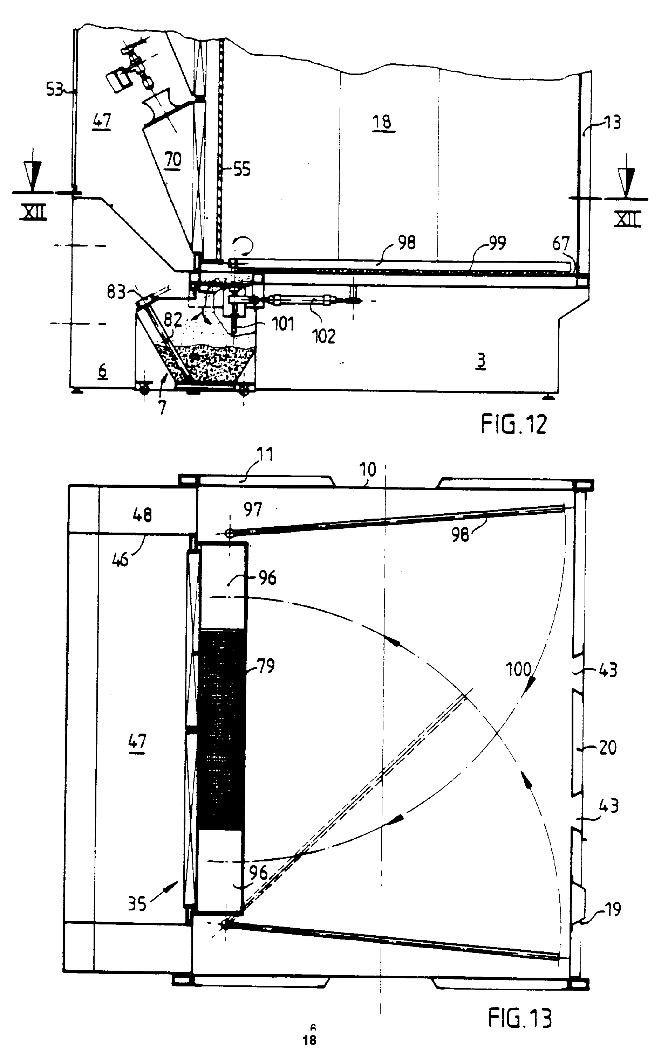

Wie Fig. 12 erkennen läßt, ist in dem Pulverbehälter (7) ein Vibrationssieb (79) eingebaut und durch ein Gitter (95) überdeckt, an das sich seitlich zwei luftdurchlässige Platten (96) aus porösem Sinterwerkstoff oder dgl. anschließen, die eine Fluidisierung des vor den Randbereichen des Filteraggregates (35) herabfallenden Pulvers ermöglichen. Seitlich der beiden Platten (96) ist durch den Kabinenboden hindurch jeweils eine Schwenkwelle (97) hochgeführt, deren Schwenkarm (98) auf der Unterseite eine auswechselbare Streifenbürste (99) trägt.

An jeder Schwenkwelle (97) greifen ein Hubzylinder (101) und ein Schwenkzylinder (102) an, die abwechselnd so betätigt werden, daß die einzelnen Schwenkarme (98) mit ihren Streifenbürsten (99) im Absenkzustand gemäß Bogenpfeil (100) nach innen geschwenkt, dann angehoben und im Lüftzustand nach außen geschwenkt werden. Die Steuerungen der Zylinder beider Schwenkwellen (97) sind zudem so aufeinander abgestimmt, daß sich die beiden Schwenkarme (98) nicht behindern.

Auf diese Weise wird das ganze sich auf dem Kabinenboden (67) ansammelnde Sprühpulver über die Bodenöffnung (78) in den Pulverbehälter (7) eingebracht. Die Betätigung der Schwenkarme (98) kann grundsätzlich während des gesamten Sprühbetriebes abwechselnd erfolgen. Die Bodenfläche läßt sich also in der Regel dauernd freihalten.

Anstatt mechanisch zu fegen, kann dies auch pneumatisch erfolgen. So läßt sich der ohnehin normalerweise als Hohlkörper ausgebildete Schwenkarm an eine Druckgasquelle anschließen und dann an seiner Unterseite oder auch seitlich der Bürstenstreifen mit einer luftdurchlässigen Wandung, etwa nach Art des Sintermaterials der Platten (96) versehen.

## Patentansprüche

1. Beschichtungskabine zum Überziehen einer Oberfläche von Werkstücken mit Beschichtungspulver, das im Beschichtungsraum (18) der Kabine mittels einer Luftströmung zum Werkstück geführt wird, mit einer Saugeinrichtung (50) zum Absaugen der Kabinenluft durch ein Filteraggregat (35) mit mehreren in Form eines Flächenfilters ausgebildeten Filterelementen (25) hindurch in einen auf deren Strömungsrückseite angeordneten Reingasraum (47), der eine Abreinigungsvorrichtung (73-76) zum zwischenzeitigen Abreinigen der Filterelemente (25) während des Sprühbetriebes aufweist, wobei auf dem Kabinenboden eine Abräumvorrichtung zum Abräumen und Zuführen von Überschußpulver zu einem Pulverbehälter angeordnet ist, dadurch gekennzeichnet, daß die Filterelemente (25) auswechselbar in einzelnen Rahmenfeldern (24) eines formsteifen Rahmenwerkes (22) sitzen, das in einer Aussparung (21) einer zwischen Beschichtungsraum (18) und Reingasraum (47) etwa lotrecht angeordneten Seitenwand (Rückwand 14) angebracht ist und daß die Filterelemente (25) Oberflächen-Membranfilter (30) mit einer luftdurchlässigen aussteifenden Tragschicht (36) und einer wenigstens einseitig auf dieser angebrachten Oberflächen-Membran (37) aus flexiblem elastisch verformbaren Kunststoff aufweisen, in die eine Vielzahl Durchbrechungen eingeformt sind.

2. Beschichtungskabine nach Anspruch 1, dadurch gekennzeichnet, daß jedes Filterelement (25) in einer durch Riegelvorrichtungen (31-33) verspannt im Rahmenwerk (22) festlegbaren Wechselkassette (26) gefaßt ist, die insbesondere vom Beschichtungsraum her quer zu ihrer Ebene in ein Feld (24) des Rahmenwerkes (22) einsetzbar ist.

3. Beschichtungskabine nach Anspruch 2, dadurch gekennzeichnet, daß wenigstens einige Riegelvorrichtungen (31-33) jeweils einen, in einem Rahmenstab (17) gelagerten Schwenkriegel (31) aufweisen, der in eine Aussparung (33) der Filterkassette (26) mindestens eines Filterelementes (25) eingreift und vorzugsweise vom Beschichtungsraum (18) her verstellbar ist.

4. Beschichtungskabine nach Anspruch 2, dadurch gekennzeichnet, daß die Filterkassette (26) eine Rahmenfassung mit U-förmigem Querschnitt hat und den Rand einer zick-zack-förmig gefalteten Flächenfilterbahn (30) insbesondere mittels einer aushärtbaren Masse (34) abdichtend umgreift.

5. Beschichtungskabine zum Überziehen der Oberfläche von Werkstücken mit Beschichtungspulver, das

7

im Beschichtungsraum (18) der Kabine mittels einer Luftströmung zum Werkstück geführt wird, mit einer Saugeinrichtung (50) zum Absaugen der Kabinenluft durch ein Filteraggregat (35) mit mehreren in Form eines Flächenfilters ausgebildeten Filterelementen (25) hindurch in einen auf deren Strömungsrückseite angeordneten Reingasraum (47), wobei zum zwischenzeitigen Abreinigen der Filterelemente (25) während des Sprühbetriebes eine Impuls-Abreinigungsvorrichtung (73-76) dient, dadurch gekennzeichnet, daß die Filterelemente (25) Oberflächen-Membranfilter (30) mit einer luftdurchlässigen aussteifenden Tragschicht (36) und einer wenigstens einseitig auf dieser angebrachten Oberflächen-Membran (37) aus flexiblem elastisch verformbaren Kunststoff aufweisen, in die eine Vielzahl langgestreckter Durchbrechungen eingeformt sind.

6. Beschichtungskabine nach Anspruch 5, dadurch gekennzeichnet, daß die Oberflächen-Membran (37) zur Bildung dünner langgestreckter Fäden zwischen schlitzartigen Durchbrechungen wenigstens eindimensional gereckt ist.

7. Beschichtungskabine nach Anspruch 1, dadurch gekennzeichnet, daß die durch jeweils eine zick-zackförmig gefaltete Oberflächen-Membranfilterbahn (30) gebildeten Filterelemente (25) in Wechselkassetten (26) gefaßt sind, die auswechselbar in einzelnen Rahmenfeldern (24) eines formsteifen Rahmenwerkes (22) sitzen, das in einer Filteraussparung (21 ) einer zwischen Beschichtungsraum (18) und Reingasraum (47) etwa lotrecht angeordneten Rückwand (14) angebracht ist.

8. Beschichtungskabine nach Anspruch 7, dadurch gekennzeichnet, daß die Abreinigungsvorrichtung (69-76) eine das Filter bzw. ein Filterelement (25) auf dessen Reingasseite (47) randdicht und druckfest umschließende Schirmhaube (69) aufweist und dieser eine Vorrichtung (73-76) zum intermittierenden Erzeugen eines Druckstoßes innerhalb des zwischen der Schirmhaube (69) und dem Filterelement (25) gebildeten Druckraumes (70) zugeordnet ist.

9. Beschichtungskabine nach Anspruch 8, dadurch gekennzeichnet, daß die Schirmhaube (69) zum Einleiten eines mittels einer Druckgasdüse erzeugten verstärkten Druckimpulses in dem Druckraum (70) eine Wandöffnung aufweist, die mit einem zentrisch zur Druckgasdüse (74) angeordneten Venturirohr (73) besetzt ist.

10. Beschichtungskabine nach Anspruch 9, dadurch gekennzeichnet, daß die Wandöffnung an der oberen Begrenzung (72) der Schirmhaube (70) angeordnet und die Druckgasdüse (74) von schräg oben wenigstens auf den mittleren Teil des Filterelementes (25) gerichtet ist.

11. Beschichtungskabine nach einem der Ansprüche 8 bis 10, dadurch gekennzeichnet, daß die Schirmhaube (70) den Querschnitt eines asymmetrischen Firstdaches mit zu seinem oberen Rand hin versetzter Firstkante hat.

12. Beschichtungskabine nach einem der Ansprüche 8 bis 11, dadurch gekennzeichnet, daß mehrere für eine Zeile oder Reihe nebeneinander angeordnete Schirmhauben (70) durch Querunterteilung einer längslaufenden Schale gebildet sind.

13. Beschichtungskabine nach Anspruch 7, dadurch gekennzeichnet, daß jede Filterkassette (26) mit ihrem weitgehend starren Einsatzrahmen den Rand der in ihr gehaltenen Filterbahn (30) abdichtend umschließt und Stützelemente zum wenigstens linienweisen Abstützen der Filterbahn (30) aufweist.

14. Beschichtungskabine nach Anspruch 5, mit einer Mehrzahl insbesondere in Reihen und Zeilen angeordneten Filterelementen (25), dadurch gekennzeichnet, daß die Impuls-Abreinigungseinrichtungen (69-77) der einzelnen Filterelemente (30) zur zyklischen Folgesteuerung an eine gemeinsame Steuereinrichtung angeschlossen sind.

15. Beschichtungskabine nach einem der Ansprüche 5 bis 14, dadurch gekennzeichnet, daß auf der Pulverseite vor dem Filteraggregat eine Pulver-Abschirmung (55) angebracht ist, deren insbesondere lamellenförmige Abschirmelemente (57) zusätzlich als Leitelemente zum Ableiten des Reinigungsstosses nach unten insbesondere einstellbar gekrümmt ausgebildet sind.

16. Beschichtungskabine nach einem der Ansprüche 1-15, dadurch gekennzeichnet, daß vor der die Filterelemente (25) aufnehmenden Seitenwand (Rückwand 14) nebst der Abräumvorrichtung (97-102) zum Abräumen und Zuführen von Überschußpulver zu einem Pulverbehälter (80) im Beschichtungsraum (18) eine zweite Abreinigungsvorrichtung (86-92) zur Grundreinigung der Filterelemente (25) angeordnet sind.

17. Beschichtungskabine nach Anspruch 16, dadurch gekennzeichnet, daß im Beschichtungsraum (18) längs der Ebene des Filteraggregates (35) hin- und hergehend ein Abreinigungswagen (86) geführt ist und eine Führung (89) für einen lotrecht hin- und hergehend bewegbaren, eine Abreinigungsdüse (92) aufweisenden Schlitten (91 ) aufweist.

18. Beschichtungskabine nach Anspruch 17, dadurch gekennzeichnet, daß dicht an insbesondere der Kabinenseite des Filteraggregates (35) eine schalenförmige Begrenzung (87) für den Einwirkungsbereich der bzw. einer Abreinigungsdüse (92) angebracht ist.

19. Beschichtungskabine nach Anspruch 18, dadurch gekennzeichnet, daß der bzw. einer Abreinigungsdüse (92) eine synchron mit dieser waagerecht verstellbare und deren Bewegungsraum überdeckende

EP 0 207 108 B2

lotrechte Leitschale (87) zugeordnet ist, die zu den jeweils unter Düseneinwirkung stehenden Flächen, insbesondere lotrechten Falten bzw. Wellen des Filteraggregates (35) hin geöffnet ist.

20. Beschichtungskabine nach einem der Ansprüche 1-19, dadurch gekennzeichnet, daß der Rückwand (14) im Beschichtungsraum (18) zwei über dem Kabinenboden (67) bewegbare Abräum-Schwenkarme (98) zugeordnet sind.

21. Beschichtungskabine nach Anspruch 20, dadurch gekennzeichnet, daß jeder Schwenkarm (98) mit einem inneren Ende an einer dicht an einem Rand der Filteranordnung (35) angeordneten lotrechten Schwenkwelle (97) angebracht ist, die derart motorisch heb- und senkbar vorgesehen ist, daß jeder Schwenkarm (98) beim Einwärtsschwenken über den Kabinenboden (67) streift, von diesem aber beim Rückwärtsschwenken abgehoben ist.

22. Beschichtungskabine nach Anspruch 20 oder 21, dadurch gekennzeichnet, daß die Antriebe (101, 102) der Schwenkarme (98) periodisch abwechselnd selbsttätig steuerbar vorgesehen sind.

23. Beschichtungskabine nach einem der Ansprüche 20 bis 22, dadurch gekennzeichnet, daß jeder biegesteif ausgebildete Schwenkarm (98) eine Aufnahme für einen auswechselbaren Bürstenstreifen (99) aufweist.

24. Beschichtungskabine nach einem der Ansprüche 20 bis 22, dadurch gekennzeichnet, daß jeder Schwenkarm (98) eine pneumatische Fegeeinrichtung, insbesondere mit einer durch Druckgas beaufschlagten porösen Wandung aufweist.

**Claims**

1. Coating booth for covering a surface of workpieces with coating powder which, in the coating zone (18) of the booth, is conducted to the workpiece by means of an air stream, the booth having a suction means (50) for sucking the air of the booth through a filter unit (35), having a plurality of filter elements (25) which are in the form of a surface filter, into a clean gas zone (47), which is disposed at the rear end of flow of said filter elements and has a cleaning device (73-76) for the intermediate cleaning of the filter elements (25) during the spraying operation, a removal device for removing and supplying surplus powder to a powder container being disposed on the floor of the booth, characterised in that the filter elements (25) are interchangeably situated in individual frame areas (24) of a rigid frame-like structure (22) which is mounted in a recess (21) in a lateral wall (rear wall 14), disposed approximately vertically between coating zone (18) and clean gas zone (47), and in that the filter elements (25) have surface-membrane filters (30), with an air-permeable, reinforcing carrier layer (36) and a surface membrane (37), which is mounted on at least one side of said layer and is formed from flexible, elastically deformable plastics material, in which membrane a plurality of openings are provided.

2. Coating booth according to claim 1, characterised in that each filter element (25) is housed in an interchangeable cassette (26), which is securable in the frame-like structure (22) tensioned by locking devices (31-33) and is insertable into an area (24) of the frame-like structure (22) especially from the-coating zone transversely to its plane.

3. Coating booth according to claim 2, characterised in that at least some locking devices (31-33) each have a pivot lock (31), which is mounted in a frame bar (17) and engages in a recess (33) in the filter cassette (26) of at least one filter element (25) and is preferably adjustable from the coating zone (18).

4. Coating booth according to claim 2, characterised in that the filter cassette (26) has a frame housing of U-shaped cross-section and sealingly engages around the edge of a zig-zag folded surface filter strip (30), more especially by means of a curable material (34).

5. Coating booth for covering the surface of workpieces with coating powder, which is conducted to the workpiece by means of an air stream in the coating zone (18) of the booth, the booth having a suction means (50) for sucking the air of the booth through a filter unit (35), having a plurality of filter elements (25) which are in the form of a surface filter, into a clean gas zone (47), which is disposed on the rear end of flow of said filter elements, a pulse cleaning device (73-76) being used for the intermediate cleaning of the filter elements (25) during the spraying operation, characterised in that the filter elements (25) have surface-membrane filters (30), with an air-permeable, reinforcing carrier layer (36) and a surface membrane (37), which is mounted on at least one side of said layer and is formed from flexible, elastically deformable plastics material, in which membrane a plurality of elongate openings are provided.

6. Coating booth according to claim 5, characterised in that the surface membrane (37) is at least linearly stretched between slot-like openings to form thin, elongate filaments.

7. Coating booth according to claim 1, characterised in that the filter elements (25), which are each formed by a zig-zag folded surface-membrane filter strip (30), are housed in interchangeable cassettes (26) which are interchangeably situated in individual frame areas (24) of a rigid frame-like structure (22), which is mounted in

9

EP 0 207 108 B2

a filter recess (21) in a rear wall (14) disposed substantially vertically between coating zone (18) and clean gas zone (47).

8. Coating booth according to claim 7, characterised in that the cleaning device (69-76) has a protective hood (69), which surrounds the filter, or respectively a filter element (25), on the clean gas side (47) of said element in an edge-tight and pressure-resistant manner, and associated with the protective hood there is a device (73-76) for the intermittent production of a surge of pressure within the pressure zone (70) formed between the protective hood (69) and the filter element (25).

9. Coating booth according to claim 8, characterised in that the protective hood (69) has a wall aperture for the introduction of an amplified pressure pulse in the pressure zone (70), such pulse being produced by means of a compressed gas nozzle, and the wall aperture being occupied by a venturi tube (73) disposed centrally relative to the compressed gas nozzle (74).

10. Coating booth according to claim 9, characterised in that the wall aperture is provided in the upper boundary (72) of the protective hood (70), and the compressed gas nozzle (74) is directed upon at least the central portion of the filter element (25) from an inclinedly upper position.

11. Coating booth according to any of claims 8 to 10, characterised in that the protective hood (70) has the cross-section of an asymmetrical ridged roof with a ridged edge offset relative to its upper edge.

12. Coating booth according to any of claims 8 to 11, characterised in that a plurality of protective hoods (70), disposed adjacent one another to make a line or row, are formed by the transverse partitioning of a longitudinally extending shell.

13. Coating booth according to claim 7, characterised in that each filter cassette (26), with its largely rigid insert frame, sealingly surrounds the edge of the filter strip (30) retained in the cassette, and each filter cassette (26) has supporting elements for supporting the filter strip (30) at least linearly.

14. Coating booth according to claim 5, having a plurality of filter elements (25), disposed more especially in rows and lines, characterised in that the pulse cleaning means (69-77) of the individual filter elements (30) are connected to a common control means for the purpose of cyclic follow-up control.

15. Coating booth according to any of claims 5 to 14, characterised in that a powder screen (55) is mounted on the powder side upstream of the filter unit, the screening elements (57) of which screen are especially lamellar in form and are additionally adapted to be adjustably curved, in particular, to serve as deflecting elements for deflecting the cleaning impact downwardly.

16. Coating booth according to any of claims 1-15, characterised in that a second cleaning device (86-92) for the thorough cleaning of the filter elements (25) is disposed upstream of the lateral wall (rear wall 14), which accommodates the filter elements (25), in addition to the removing device (97-102) for removing and supplying surplus powder to a powder container (80) in the coating zone (18).

17. Coating booth according to claim 16, characterised in that a cleaning truck (86) is conducted back and forth in the coating zone (18) longitudinally of the plane of the filter unit (35) and has a guide means (89) for a slide member (91), which is displaceable back and forth vertically and has a cleaning nozzle (92).

18. Coating booth according to claim 17, characterised in that a shell-like boundary (87) for the range of operation of the, or a, cleaning nozzle (92) is mounted close to the booth side of the filter unit (35) in particular.

19. Coating booth according to claim 18, characterised in that the, or a, cleaning nozzle (92) has associated therewith a vertical deflector shell (87), which is horizontally adjustable in synchronism with the nozzle and covers the area of movement of the nozzle, which deflector shell is opened towards the faces which are affected by the nozzle, especially vertical folds or undulations of the filter unit (35).

20. Coating booth according to any of claims 1-19, characterised in that the rear wall (14) in the coating zone (18) has associated therewith two remover pivot arms (98) which are displaceable above the booth floor (67).

21. Coating booth according to claim 20, characterised in that each pivot arm (98) is mounted at an inner end on a vertical pivot shaft (97), which is disposed close to one edge of the filter arrangement (35) and is provided in such a mechanically raisable and lowerable manner that each pivot arm (98) sweeps over the booth floor (67) during the inwardly pivotal movement, but is raised therefrom during the rearwardly pivotal movement.

22. Coating booth according to claim 20 or 21, characterised in that the drives (101, 102) of the pivot arms (98) are provided so as to be automatically controllable in a periodically alternate manner.

23. Coating booth according to any of claims 20 to 22, characterised in that each bending-resistant pivot arm (98) has a receiver member for an interchangeable brush strip (99).

24. Coating booth according to any of claims 20 to 22, characterised in that each pivot arm (98) has a pneumatic sweeping means, more especially one with a porous wall which has compressed gas acting thereon.

10

**Revendications**

1. Cabine pour recouvrir une surface de pièces par application d'une poudre qui est amenée jusqu'à la pièce au moyen d'un courant d'air dans la chambre d'application (18) de la cabine, cette cabine comportant un dispositif d'aspiration (50) pour aspirer l'air de la cabine à travers un ensemble filtrant (35) pourvu de plusieurs éléments filtrants (25) formés par des surfaces filtrantes, jusqu'à une chambre à gaz épuré (47) disposée sur son côté arrière par rapport au sens du courant et comportant un dispositif de nettoyage (73-76) pour nettoyer périodiquement les éléments filtrants (25) pendant la projection de poudre, et dans laquelle un dispositif d'évacuation est disposé sur le fond de la cabine pour évacuer un surplus de poudre et l'amener à un réservoir de poudre, caractérisée en ce que les éléments filtrants (25) sont montés de manière amovible dans des champs individuels (24) d'un châssis rigide (22) qui est disposé dans une ouverture (21) d'une paroi sensiblement verticale (paroi arrière 14) située entre la chambre d'application (18) et la chambre à gaz épuré (47), et en ce que les éléments filtrants (25) comportent des filtres à membrane superficielle (30), composés d'une couche porteuse et raidisseuse (36), perméable à l'air, et d'une membrane superficielle (37) en matière synthétique souple déformable élastiquement qui est disposée au moins sur un côté de ladite couche et dans laquelle est ménagé un grand nombre de perforations.

2. Cabine selon la revendication 1, caractérisée en ce que chaque élément filtrant (25) est contenu dans une cassette interchangeable (26) agencée pour être fixée rigidement dans le châssis (22) au moyen de dispositifs de verrouillage (31-33) et pour être insérée dans un champ (24) du châssis (22) transversalement par rapport à son propre plan, en particulier à partir de la chambre d'application.

3. Cabine selon la revendication 2, caractérisée en ce qu'au moins quelques-uns des dispositifs de verrouillage (31-33) comportent chacun un loquet (31) monté pivotant sur une barre (17) du châssis, ce loquet étant agencé pour s'engager dans une ouverture (33) de la cassette (26) d'au moins un élément filtrant (25) et pour être manoeuvré de préférence à partir de la chambre d'application (18).

4. Cabine selon la revendication 2, caractérisée en ce que la cassette (26) comporte un cadre porteur à section en U et entoure d'une façon étanche, notamment au moyen d'une masse durcissable (34), le bord d'une nappe filtrante (30) pliée en zigzag.

5. Cabine pour recouvrir la surface de pièces par application d'une poudre qui est amenée jusqu'à la pièce au moyen d'un courant à air dans la chambre d'application (18) de la cabine, cette cabine comportant un dispositif d'aspiration (50) pour aspirer l'air de la cabine à travers un ensemble filtrant (35) pourvu de plusieurs éléments filtrants (25) formés par des surfaces filtrantes, jusqu'à une chambre à gaz épuré (47) disposée sur son côté arrière par rapport au sens du courant, et dans laquelle un dispositif de nettoyage à impulsions (73-76) sert à nettoyer périodiquement les éléments filtrants (25) pendant la projection de poudre, caractérisée en ce que les éléments filtrants (25) comportent des filtres à membrane superficielle (30), composés d'une couche porteuse et raidisseuse (36), perméable à l'air, et d'une membrane superficielle (37) en matière synthétique souple déformable élastiquement qui est déposés au moins sur un côté de ladite couche et dans laquelle est ménagé un grand nombre de perforations allongées.

6. Cabine selon la revendication 5, caractérisée en ce que la membrane superficielle (37) est étirée suivant au moins une dimension pour former des fils minces longitudinaux entre des perforations en forme de fentes.

7. Cabine selon la revendication 1, caractérisée en ce que les éléments filtrants (25) formés par une nappe filtrante (30) à membrane superficielle, pliée en zigzag, sont contenus dans des cassettes interchangeables (26) qui sont montées de manière amovible dans des champs individuels (24) d'un châssis rigide (22) qui est disposé dans une ouverture de filtration (21) d'une paroi arrière sensiblement verticale (14) située entre la chambre d'application (18) et la chambre à gaz épuré (47).

8. Cabine selon la revendication 7, caractérisée en ce que le dispositif de nettoyage (69-76) comporte un capot (69) entourant le filtre ou un élément filtrant (25) du côté du gaz épuré (47), d'une manière étanche sur son pourtour et résistante à la pression, et un dispositif (73-76) associé à ce capot pour produire par intermittence un à-coup de pression à l'intérieur de l'espace confiné (70) entre le capot (69) et l'élément filtrant (25).

9. Cabine selon la revendication 8, caractérisée en ce que le capot (69), pour permettre à une impulsion de pression accrue, produite au moyen d'une buse à gaz comprimé, d'entrer dans ledit espace confiné (70), comporte une ouverture équipée d'un venturi (73) disposé concentriquement par rapport à ladite buse (74).

10. Cabine selon la revendication 9, caractérisée en ce que ladite ouverture se trouve dans une paroi supérieure (72) du capot (70) et en ce que ladite buse (74) est dirigée, obliquement de haut en bas, au moins vers la partie centrale de l'élément filtrant (25).

11. Cabine selon l'une des revendications 8 à 10, caractérisée en ce que le capot (70) présente, en coupe transversale, une forme en toit asymétrique dont le faîte est décalé en direction du bord supérieur du capot.

12. Cabine selon l'une des revendications 8 à 11, caractérisée en ce que plusieurs capots (70) juxtaposés en ligne ou en colonne sont formés par subdivision transversale d'une coque longitudinale.

13. Cabine selon la revendication 7, caractérisée en ce que chaque cassette de filtre (26) entoure de manière étanche, par son cadre de montage sensiblement rigide, le bord de la nappe filtrante (30) qu'elle contient, et comporte des éléments d'appui pour épauler la nappe filtrante (30) au moins le long d'une ligne.

14. Cabine selon la revendication 5, comportant une pluralité d'éléments filtrants (25) disposés notamment en colonnes et en lignes, caractérisée en ce que les dispositifs de nettoyage à impulsions (69-77) des différents éléments filtrants (30) sont raccordés à une unité de commande commune pour être commandés successivement suivant un cycle.

15. Cabine selon l'une des revendications 5 à 14, caractérisée en ce qu'un écran pour la poudre (55) est disposé devant l'ensemble filtrant, du côté de l'arrivée de la poudre, cet écran étant composé d'éléments (57), notamment en forme de lamelles, qui forment en outre des éléments de guidage pour dévier vers le bas le choc de nettoyage, ces éléments pouvant avoir une courbure réglable.

16. Cabine selon l'une des revendications 1 à 15, caractérisée en ce qu'elle comporte, dans la chambre d'application (18), devant la paroi (paroi arrière 14) pourvue des éléments filtrants (25), un second dispositif de nettoyage (86-92) pour le nettoyage primaire des éléments filtrants (25), en plus du dispositif d'évacuation (97-102) prévu pour évacuer le surplus de poudre et l'amener à un réservoir de poudre (80).

17. Cabine selon la revendication 16, caractérisée en ce qu'un véhicule de nettoyage (86) est mobile en va-et-vient dans la chambre à application (18), le long du plan de l'ensemble filtrant (35), et comporte un organe de guidage (89) pour un chariot (91) mobile verticalement en va-et-vient et équipé d'une buse de nettoyage (92).

18. Cabine selon la revendication 17, caractérisée en ce que la zone d'action de la buse de nettoyage (92) est limitée par une coque (87) placée contre l'ensemble filtrant (35), en particulier du côté de la cabine par rapport à celui-ci.

19. Cabine selon la revendication 18, caractérisée en ce que la ou une buse de nettoyage (92) est associée à une coque directrice verticale (87) couvrant son champ de déplacement et mobile horizontalement en synchronisme avec elle, cette coque étant ouverte en direction des surfaces exposées à l'action de la buse, notamment des ondes ou plis verticaux de l'ensemble filtrant (35).

20. Cabine selon l'une des revendications 1 à 19, caractérisée en ce que la paroi arrière (14) est équipée de deux bras d'évacuation pivotants (98) qui sont mobiles au-dessus du fond de la cabine (67) dans la chambre d'application ( 18).

21. Cabine selon la revendication 20, caractérisée en ce que chaque bras pivotant (98) est monté, par une extrémité intérieure, sur un arbre vertical pivotant (97) disposé tout près d'un bord de l'ensemble filtrant (35) et pourvu d'un entraînement motorisé le levant et l'abaissant de telle façon que chaque bras pivotant (98) balaie le fond de la cabine (67) à l'aller, mais est levé par rapport à lui au retour.

22. Cabine selon la revendication 20 ou 21, caractérisée en ce que les entraînements (101, 102) des bras pivotants (98) sont commandés automatiquement et périodiquement de manière alternée.

23. Cabine selon l'une des revendications 20 à 22, caractérisée en ce que chaque bras pivotant (98) est rigide et comporte un logement pour une bande de brossage (99) qui est interchangeable.

24. Cabine selon l'une des revendications 20 à 22, caractérisée en ce que chaque bras pivotant (98) comporte un dispositif pneumatique de balayage, notamment un dispositif pourvu d'une paroi poreuse recevant un gaz sous pression.

FIG: 1

FIG. 2

FIG.4

FIG.3

14

FIG. 5

FIG. 6

FIG. 7

FIG. 8

FIG. 9

16

FIG.10

FIG.11

FIG.12

FIG.13